# EUROPÄISCHE PATENTSCHRIFT

(11) **EP 2 660 098 B1**
(45) Veröffentlichungstag und Bekanntmachung des Hinweises auf die Patenterteilung: **22.02.2017**
(21) Anmeldenummer: 13166477.3
(22) Anmeldetag: 03.05.2013
(51) Int. Cl.: B60N 2/015, B60N 2/01, B60N 2/60

(54) **Befestigungsclip**
Fastening clip
Clip de fixation

(30) Priorität: 04.05.2012 FR 1254131
(43) Veröffentlichungstag der Anmeldung: 06.11.2013
(73) Patentinhaber: ITW Fastener Products GmbH, 58642 Iserlohn (DE)
(72) Erfinder: Antoine, Hervé, 67330 Obersoultzbach (FR); Kuhm, Michel, 67340 Ingwiller (FR); Ouine, Emmanuel, 67240 Bischwiller (FR)
(74) Vertreter: Hauck Patentanwaltspartnerschaft mbB

(56) Entgegenhaltungen:
- WO-A2-2005/076963
- US-A- 4 916 778

## Beschreibung

Die Erfindung betrifft einen Befestigungsclip zum Befestigen eines Bügels, insbesondere eines Metallbügels, in einem Fahrzeug nach dem Oberbegriff des Anspruchs 1.

Zur reversiblen Befestigung von Bauteilen, beispielsweise von Sitzbänken, werden im Automobilbereich Befestigungsclips verwendet, die an der Karosserie des Fahrzeugs befestigt werden. An dem zu befestigenden Bauteil ist ein Vorsprung, beispielsweise ein U-förmiger Metallbügel, befestigt, der in den Befestigungsclip eingeschoben und in diesem fixiert werden kann, beispielsweise mittels einer Rastverbindung. Der Befestigungsclip soll den Bügel und somit das Bauteil einerseits zuverlässig halten, so dass ein versehentliches Lösen beispielsweise durch Vibrationen oder Erschütterungen sicher ausgeschlossen ist. Andererseits soll der Bügel zur Demontage des Bauteils mit geringem Aufwand zerstörungsfrei aus dem Befestigungsclip entfernbar sein.

Aus der WO 2007/105062 A1 ist ein Befestigungsclip bekannt, der zwei gegeneinander gerichtete, federnde Rastlaschen aufweist, zwischen die der Bügel eingeschoben werden kann. Durch den Bügel werden diese Rastlaschen beim Einschieben des Bügels auseinandergedrückt und federn nach dem vollständigen Einschieben des Bügels zurück in ihre Ausgangslage. Nachteilig an diesem Befestigungsclip ist, dass die Rastelemente nicht oder nur mit großem Aufwand wieder auseinandergedrückt werden können, um den Bügel und somit das Bauteil demontieren zu können.

Aus der US 4,916,778 A ist ein Befestigungsclip bekannt, der einen seitlich in die Aufnahme einschiebbares Halteelement aufweist. Um bei einer Zugkraft auf den in die Aufnahme ragenden Bügel eine höhere Haltekraftbereitzustellen, weist das Halteelement einen Vorsprung auf, der in eine Aussparung in der Aufnahme ragt, so dass sich das Halteelement an dieser Aussparung abstützt.

Ein weiterer Befestigungsclip ist aus der FR 2 946 925 A1 bekannt. Dieser weist ein Rastelement auf, hinter dem der Bügel verrasten kann. Zur Sicherung des Rastelements gegen versehentliches Öffnen weist dieser Befestigungsclip ein Sicherungselement auf, das das Rastelement in der verrasteten Stellung fixiert. Bei diesem Befestigungsclip kann es aber durch Erschütterungen und insbesondere durch Zugkräfte auf den Bügel zu einem versehentlichen Lösen des Bügels kommen.

Aufgabe der Erfindung ist es, einen Befestigungsclip für einen Bügel bereitzustellen, der eine zuverlässige Fixierung des Bügels gewährleistet, aber eine einfache Demontage des Bügels ermöglicht.

Zur Lösung der Aufgabe ist ein Befestigungsclip zum Befestigen eines Bügels, insbesondere eines Metallbügels in einem Fahrzeug vorgesehen, wobei der Befestigungsclip in eine Öffnung eines Karosserieteils eingeschoben und in dieser fixiert werden kann. Der Befestigungsclip weist ein Gehäuse auf, mit einer Einschuböffnung und einem länglichen Aufnahmeraum für den Bügel. Im Aufnahmeraum ist ein Rastelement vorgesehen, das federnd von einer Halteposition, in der das Halteelement den Bügel im Aufnahmeraum hält, in eine Freigabeposition, in der der Bügel in den Aufnahmeraum eingeführt bzw. aus diesem herausgezogen werden kann, und eine Fixierposition bewegbar ist, Im Aufnahmeraum und am Rastelement sind korrespondierende Halteelemente vorgesehen, die in der Fixierposition das Rastelement fixieren. Das Rastelement ist entgegen der Einschubrichtung von der Halteposition in die Fixierposition bewegbar, so dass das Rastelement bei einer Zugbelastung auf den Bügel in die Fixierposition bewegt wird und der Befestigungsclip bzw. das Rastelement gesichert ist.

Durch die Fixierung in der Fixierposition kann das Rastelement nicht in die Freigabeposition bewegt werden, in der der Bügel aus dem Aufnahmeraum entnehmbar ist. Somit ist der Bügel zuverlässig im Befestigungsclip gehalten. Das Rastelement ist beispielsweise so ausgebildet, dass es bei einer definierten Belastung, beispielsweise bei einer Zugbelastung auf den Bügel, in die Fixierposition bewegt wird, so dass bei dieser Belastung eine zusätzliche Sicherung durch die Halteelemente erfolgt. Ist der Bügel unbelastet, kann das Rastelement federnd in die Halteposition zurück bewegt werden, von der das Rastelement zum Lösen des Bügels einfach in die Freigabeposition bewegt werden kann. Zum Lösen des Befestigungsclips bzw. des Bügels muss das Rastelement also erst zurück in die Halteposition bewegt werden, von der ein Verschieben in die Freigabeposition möglich ist. Die Halteelemente sind in Einschubrichtung hintereinander angeordnet und überdecken sich in der Halteposition und der Fixierposition in Einschubrichtung zumindest teilweise, so dass diese bei der Bewegung von der Halteposition in die Fixierposition in Eingriff gelangen und das Rastelement fixieren können.

Vorzugsweise ist an zumindest einem Halteelement ein in Richtung zum anderen Halteelement vorstehender Haken vorgesehen, der am jeweils anderen Halteelement angreift, wenn sich das Rastelement in der Fixierposition befindet. Der Haken ist also so ausgebildet, dass dieser parallel zur Bewegungsrichtung des Rastelements von der Halteposition in die Fixierposition verläuft, wodurch dieser am jeweils anderen Halteelement eingreift, wenn die Halteelemente aufeinander zu bewegt werden. Der Haken greift so in das jeweils andere Halteelement ein, dass das Rastelement fixiert ist und nur entgegen der Bewegungsrichtung in die Halteposition zurück bewegt werden kann. Insbesondere ist so eine Bewegung des Rastelements in die Freigabeposition durch den Haken ausgeschlossen. Der Haken gewährleistet also ein sicheres Fixieren des Bügels, da die Halteelemente durch diesen Haken so gekoppelt werden können, dass das Rastelement lagefest zum Gehäuse fixiert ist. Am anderen Halteelement ist vorzugsweise eine entsprechende Gegenstruktur vorgesehen, beispielsweise eine Öffnung oder eine Aufnahme für den Haken.

Es ist aber auch denkbar, dass an beiden Halteelementen Haken vorgesehen sind, die insbesondere gegeneinander gerichtet sind und in der Fixierposition des Rastelements miteinander in Eingriff sind oder am jeweils anderen Halteelement angreifen. Durch eine entsprechende Wahl der Geometrie der Haken kann so die Fixierung des Rastelements in der Fixierposition verbessert werden.

Das Rastelement ist federnd von der Halteposition in die Freigabeposition bzw. in die Fixierposition bewegbar. Dazu ist eine flexible Lagerung des Rastelements im Gehäuse erforderlich. Diese kann beispielsweise durch einen Steg erfolgen, an dem das Rastelement federnd und/oder schwenkbar gelagert ist, wobei der Steg insbesondere an der Einschuböffnung des Gehäuses vorgesehen sein kann. Dadurch ist das Rastelement an der Einschuböffnung fixiert, so dass ein versehentliches Verschieben des Rastelements durch eine Bewegung des Bügels verhindert ist. Der Steg kann beispielsweise so ausgebildet sein, dass das Rastelement um die Längsachse oder eine quer zur Längsachse des Aufnahmeraums verlaufende Schwenkachse federnd verschwenkt werden kann.

Am Rastelement bzw. am Gehäuse können Einführflächen, insbesondere Einführschrägen, vorgesehen sein, die ein leichteres Einschieben des Bügels in das Gehäuse ermöglichen.

Das Rastelement kann, beispielsweise mit einem Werkzeug, von der Halteposition in die Freigabeposition bzw. von der Fixierposition in die Halteposition bewegt werden. Am Rastelement ist dazu vorzugsweise eine Aufnahme für ein Werkzeug vorgesehen, das beispielsweise zwischen Karosserieteil und Bauteil eingeschoben werden kann, um das Rastelement zu verschieben.

Das Gehäuse kann in Umfangsrichtung und am der Einschuböffnung entgegengesetzten Ende vollständig geschlossen sein, so dass das Gehäuse zur Karosserie vollständig geschlossen ist. Ist der Befestigungsclip in eine Karosserieöffnung eingesetzt, kann der Befestigungsclip die Öffnung dicht abschließen, so dass ein Eindringen von Schmutz oder Flüssigkeiten in die Öffnung verhindert werden kann.

Um eine bessere Abdichtung der Öffnung der Karosserie zu erreichen, ist an der Einschuböffnung vorzugsweise ein umlaufender, vom Gehäuse abstehender Flansch vorgesehen, an dem eine in Umfangsrichtung umlaufende Dichtung vorgesehen ist. Diese liegt am Rand der Öffnung bzw. an der Oberfläche des Karosserieteils an und dichtet den Befestigungsclip zum Karosserieteil dicht ab.

An der Einschuböffnung des Gehäuses können zusätzliche Anlageflächen vorgesehen sein, an welchen der Bügel anliegt, so dass die Einschubtiefe in den Aufnahmeraum begrenzt ist. Diese dienen zudem der Geräuschminimierung, da der Bügel zwischen Rastelement und Anlagefläche spielfrei gehalten ist und nicht klappern kann. Zusätzlich können die Anlageflächen als Abstandhalter ausgebildet sein, so dass zwischen Bauteil und Karosserie ausreichend Platz vorhanden ist, um beispielsweise ein Werkzeug einzuschieben, mit dem das Rastelement bewegt werden kann.

Um eine zusätzliche Geräuschbildung aufgrund von Vibrationen zu verhindern, können am Gehäuse zusätzliche Dämpfungselemente aus einem weichen Kunststoff vorgesehen sein. Diese können so angeordnet sein, dass diese zwischen Befestigungsclip und Bügel oder zwischen Befestigungsclip und Karosserie angeordnet sind und zwischen diesen jeweils eine Geräuschbildung aufgrund von Vibrationen oder Erschütterungen vermeiden. Durch solche Dämpfungselemente, die elastisch nachgeben, kann zudem ein Spiel des Befestigungsclips im Fahrzeug reduziert werden, so dass ein besserer Sitz des Befestigungsclips im Karosserieteil möglich ist.

Diese Dämpfungselemente können zumindest teilweise in die Wand des Gehäuses integriert sein, so dass diese nicht oder nur geringfügig über die Außenwand des Befestigungsclips hervorstehen.

Der Befestigungsclip ist beispielsweise in einem Spritzgussverfahren hergestellt. Sind die zusätzlichen Dämpfungselemente teilweise in die Wand des Gehäuses integriert, ist der Befestigungsclip beispielsweise in einem Zwei-Komponenten-Spritzgussverfahren hergestellt, so dass die Dämpfungselemente stoffschlüssig mit dem Gehäuse bzw. dem übrigen Befestigungsclip verbunden sind.

Zur Befestigung des Befestigungsclips im Fahrzeug sind vorzugsweise auf der Außenseite des Gehäuses Befestigungselemente, insbesondere Rastvorsprünge vorgesehen, die auf der Rückseite des Karosserieteils verrasten können.

Weitere Vorteile und Merkmale ergeben sich aus der nachfolgenden Beschreibung in Verbindung mit den beigefügten Zeichnungen. In diesen zeigen:
- Figur 1 ein Karosserieteil mit erfindungsgemäßen Befestigungsclips und einer Sitzbank, die am Karosserieteil befestigt wird,
- Figur 2 das Karosserieteil aus Figur 1 mit dem Tragrahmen der Sitzbank aus Figur 1,
- Figur 3 eine Detailansicht des Karosserieteils mit der Tragstruktur der Sitzbank,
- Figur 4 eine perspektivische Ansicht eines erfindungsgemäßen Befestigungsclips,
- Figur 5 eine Draufsicht auf den Befestigungsclip aus Figur 4, und
- Figur 6 eine Schnittansicht durch den Befestigungsclip aus Figur 4.

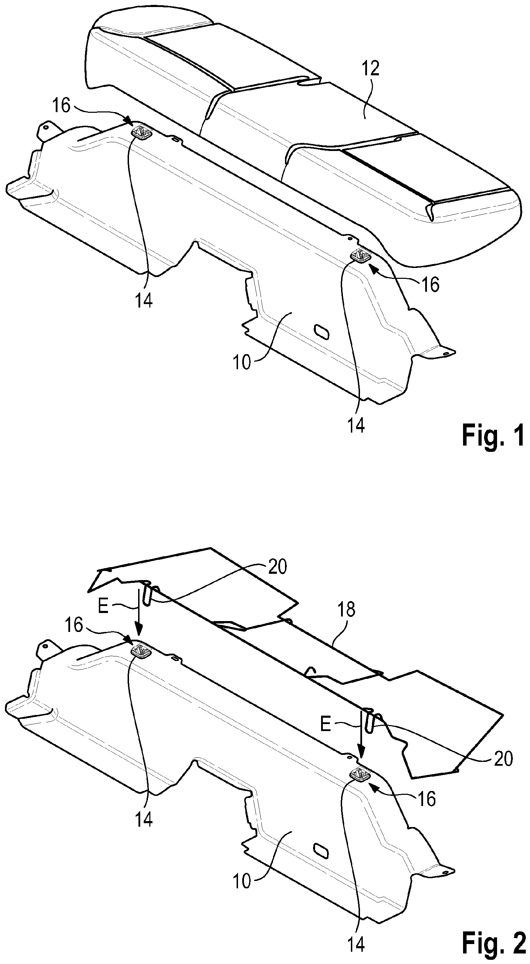

In Figur 1 ist ein Karosserieteil 10 gezeigt, an dem ein Bauteil 12, hier eine Rücksitzbank eines Fahrzeugs, befestigt wird. Am Karosserieteil 10 sind dazu Öffnungen 14 vorgesehen, in die jeweils ein Befestigungsclip 16 eingeschoben und in dieser fixiert ist.

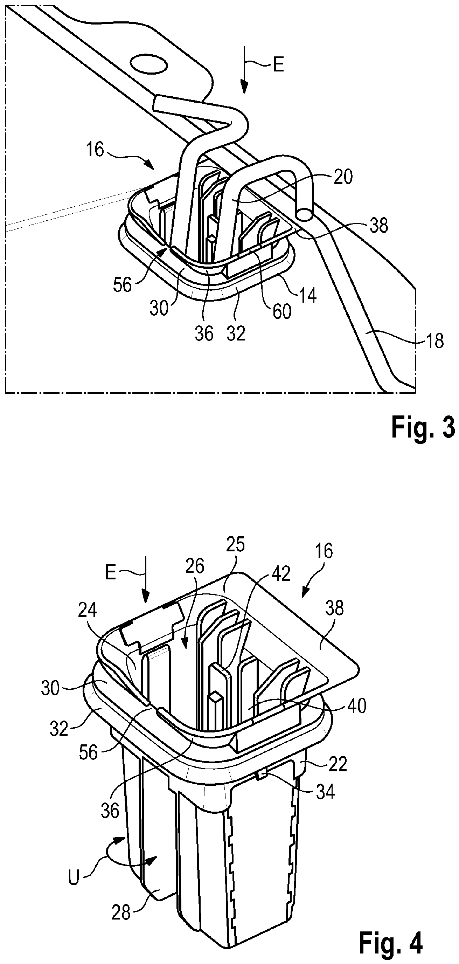

Wie in Figur 2 zu sehen ist, weist das Bauteil 12 rückseitig eine Tragstruktur 18 aus Metall auf, an der zwei abstehende, U-förmige Bügel 20 vorgesehen sind. Diese Bügel 20 werden zum Befestigen des Bauteils 12 in einer Einschubrichtung E in die Befestigungsclips 16 eingeschoben und in diesen fixiert (siehe auch Figur 3).

Wie in den Figuren 4 bis 6 zu sehen ist, hat der Befestigungsclip 16 ein Gehäuse 22, das in der hier gezeigten Ausführungsform im Wesentlichen rechteckig ausgebildet ist und einen länglichen Aufnahmeraum 24 definiert, in den der Bügel 20 in Einschubrichtung E eingeschoben werden kann. Abhängig von der Form des Bügels 20 und den Einbaubedingungen kann das Gehäuse 22 aber auch eine andere Form aufweisen.

An einem ersten Ende 25 weist das Gehäuse 22 eine Einschuböffnung 26 auf, in die der Bügel 20 eingeschoben werden kann. Das Gehäuse 22 ist in Umfangsrichtung U und am der Einschuböffnung 26 entgegengesetzten Ende 28 vollständig geschlossen, so dass das Gehäuse 22 gewissermaßen einen dicht abschließenden Topf bildet.

An der Einschuböffnung 26 ist ein senkrecht abstehender Flansch 30 angeordnet, an dem eine umlaufende Dichtung 32 vorgesehen ist. Auf der Außenseite des Gehäuses 22 sind des Weiteren Befestigungselemente 34, hier Rastelemente, zur Montage des Befestigungsclips 16 in der Öffnung 14 des Karosserieteils 10, vorgesehen.

Der Befestigungsclip 16 wird mit dem Ende 28 in die Öffnung 14 eingeschoben, bis der Flansch 30 bzw. die Dichtung 32 an der Oberfläche des Karosserieteils 10 anliegen und die Befestigungselemente 34 auf der Rückseite des Karosserieteils 10 einrasten. Da das Gehäuse 22 zum Karosserieteil 10 vollständig geschlossen ist, ist die Öffnung 14 durch das Gehäuse 22 des Befestigungsclips 16 und die umlaufende Dichtung 32 vollständig geschlossen, so dass ein Eindringen von Schmutz oder Feuchtigkeit in die Öffnung 14 verhindert ist.

An der Einschuböffnung 26 weist der Befestigungsclip 16 des Weiteren Einführflächen 36, 38 auf, die der Zentrierung des Bügels 20 beim Einschieben in den Aufnahmeraum 24 dienen.

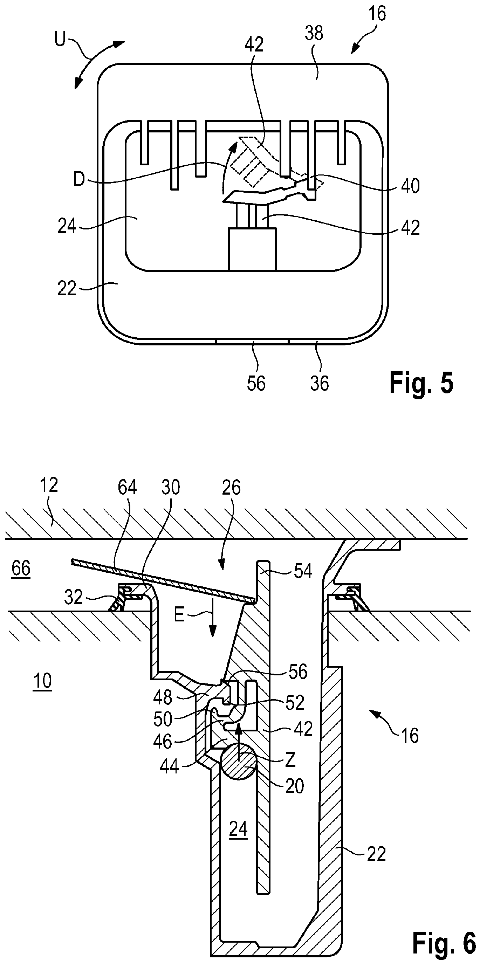

Im Aufnahmeraum 24 ist ein in Einschubrichtung E verlaufender Steg 40 vorgesehen (siehe insbesondere Figur 5), an dem ein Rastelement 42 federnd gehalten ist. Das Rastelement 42 kann in einer Schwenkrichtung D federnd um den Steg 40 geschwenkt werden.

Wie in Figur 6 zu sehen ist, erstreckt sich das Rastelement 42 in Einschubrichtung E in den Aufnahmeraum 24 und weist eine Rastnase 44 auf, an der der Bügel 20 verrasten kann.

In den Figuren 5 und 6 ist das Rastelement 42 jeweils in einer Halteposition gezeigt. Der Bügel 20 ist in den Aufnahmeraum 24 eingeführt und hinter der Rastnase 44 eingerastet, so dass dieser im Aufnahmeraum 24 gehalten ist.

Zum Einführen des Bügels 20 wird das Rastelement 42 in Schwenkrichtung D bezüglich Figur 5 im Uhrzeigersinn in eine Freigabeposition verschwenkt (gestrichelte Linie), in der der Aufnahmeraum 24 freigegeben ist und der Bügel 20 zwischen Gehäuse 22 und Rastelement 42 eingeschoben werden kann. Ist der Bügel 20 weit genug in den Aufnahmeraum 24 eingeschoben, kann das Rastelement 42 in die Halteposition zurückfedern, so dass der Bügel 20 auf der Rückseite der Rastnase 44 verrastet und sicher im Befestigungsclip 16 gehalten ist.

Die Schwenkachse, um die das Rastelement 42 verschwenkt wird, ist hier in Einschubrichtung E des Bügels 20 beziehungsweise in Längsrichtung des Gehäuses 22 angeordnet. Abhängig von der Form des Gehäuses 22 oder der Einschubrichtung des Bügels 20 kann die Schwenkachse aber auch in einer anderen Richtung angeordnet sein.

Wie in Figur 6 zu sehen ist, ist am Gehäuse 22 oberhalb des Halteelements 46 zusätzlich eine Gleitfläche 56 vorgesehen, an der das Rastelement 42 anliegt. Wird auf das Rastelement 42 eine Druckkraft in Einschubrichtung E ausgeübt, beispielsweise beim Einführen eines Bügels, wird das Rastelement 42 in Einschubrichtung E und die Gleitfläche 45 quer dazu verschoben, so dass der Aufnahmeraum 24 für den Bügel 20 freigegeben wird.

Wie in Figur 5 zu sehen ist, sind am Gehäuse 22 und am Rastelement 42 zusätzliche Halteelemente 46, 48 vorgesehen, die jeweils einen Haken 50, 52 aufweisen. In der in Figur 5 gezeigten Halteposition, in der der Bügel 20 am Rastelement 42 gehalten ist, sind die Halteelemente 46, 48 in Einschubrichtung E hintereinander angeordnet und überdecken sich zumindest teilweise. In der Halteposition greifen die Halteelemente 46, 48 aber nicht aneinander an.

Wird auf den Bügel 20 eine Zugkraft Z entgegen der Einschubrichtung E ausgeübt, wird das Rastelement 42 entgegen der Einschubrichtung E geringfügig aus dem Aufnahmeraum 24 herausgezogen. Dadurch gelangen die Haken 50, 52 miteinander in Eingriff beziehungsweise greifen am jeweils anderen Halteelement 46, 48 an.

In dieser Fixierposition wird ein weiteres Verschieben des Rastelements 42 und somit des Bügels 20 entgegen der Einschubrichtung E verhindert. Aufgrund der Haken 50, 52 ist in dieser Fixierposition aber auch ein Verschieben quer zur Einschubrichtung E beziehungsweise in Schwenkrichtung D in die Freigabeposition verhindert, so dass ein Lösen des Rastelements 42 beziehungsweise des Bügels 20 sicher ausgeschlossen ist.

Ein Lösen des Rastelements 42 ist nur möglich, indem die Halteelemente 46, 48 durch ein Zurückbewegen des Rastelement 42 in die Halteposition gelöst werden. Aus der Halteposition kann das Rastelement 42 anschließend in die Freigabeposition bewegt werden.

Das Zurückbewegen des Rastelements 42 in die Halteposition kann nach einem Nachlassen der Zugkraft Z durch die Rückstellkraft erfolgen, die der federnde Steg 40 bereitstellt. Es ist aber auch möglich, das Rastelement 42 mit einem Werkzeug aktiv in die Halteposition zu verschieben.

Am Rastelement 42 ist dazu eine Aufnahme 54 vorgesehen, an der ein Werkzeug 64 angreifen kann, das zwischen Bauteil 12 und Karosserieteil 10 eingeschoben werden kann. Um das Einschieben des Werkzeugs 64 beziehungsweise dessen Zentrierung zu erleichtern, ist an der Einführfläche 36 eine Aussparung 56 vorgesehen, in die das Werkzeug 64 eingeschoben werden kann. In montiertem Zustand liegt die Tragstruktur 18 beziehungsweise das Bauteil 12 auf den Einführflächen 36, 38 auf. Die Einführflächen 36, 38 stehen über das Karosserieteil 10 vor, so dass zwischen Bauteil 12 und Karosserieteil 10 ein Spalt 66 gebildet ist, in den das Werkzeug 64 eingeführt werden kann.

Wie insbesondere in Figur 4 zu sehen ist, sind auf der Außenseite des Gehäuses 22 Dämpfungselemente 58, 60 vorgesehen, die aus einem weicheren Kunststoff als das Gehäuse 22 hergestellt sind. Die Dämpfungselemente 58, 60 sind hier in das Gehäuse 22 integriert, stehen aber teilweise geringfügig über das Gehäuse 22 hervor.

Die an der Umfangsfläche angeordneten Dämpfungselemente 58 können ein gegebenenfalls vorhandenes Spiel zwischen Befestigungsclip 16 und Karosserieteil 10 ausgleichen, so dass der Befestigungsclip 16 spielfrei gehalten ist und eine Geräuschbildung zwischen Befestigungsclip 16 und Karosserieteil 10 verhindert ist.

Die Dämpfungselemente 60 am Ende 25 des Gehäuses 22 dienen als Auflage für den Bügel 20 beziehungsweise die Tragstruktur 18 und können ein gegebenenfalls zwischen Befestigungsclip 16 und Bauteil 12 vorhandenes Spiel ausgleichen.

Der Befestigungsclip 16 ist vorzugsweise im Spritzgussverfahren hergestellt. Im hier gezeigten Ausführungsbeispiel ist der Befestigungsclip 16 im Zwei-Komponenten-Spritzgussverfahren hergestellt, so dass die Dämpfungselemente 58, 60 stoffschlüssig mit dem Gehäuse 22 verbunden sind.

Statt der hier gezeigten Haken 50, 52 können die Halteelemente 46, 48 auch andere Strukturen aufweisen, durch die das Rastelement 42 in der Fixierposition lagefest gehalten ist. Es ist beispielsweise auf denkbar, dass lediglich an einem der Halteelemente 46, 48 ein Haken 50, 52 vorgesehen ist und am jeweils andere Halteelement 46,48 eine Aussparung, in die der Haken 50, 52 eingreifen kann.

Das Rastelement 42 muss auch nicht in Einschubrichtung E in die Fixierposition bewegt werden. Diese kann, beispielsweise abhängig von einer vorherrschenden Belastungsrichtung, in einer anderen Richtung erfolgen. Bevorzugt wird das Rastelement 42 aber in eine Belastungsrichtung in die Fixierposition bewegt, so dass bei einer entsprechenden Belastung eine zusätzliche Sicherung des Rastelements 42 erfolgt.

## Patentansprüche

1. Befestigungsclip (16) zum Befestigen eines Bügels (20), insbesondere eines Metallbügels, in einem Fahrzeug, wobei der Befestigungsclip (16) in eine Öffnung (14) eines Karosserieteils (10) eingeschoben und in dieser fixiert werden kann, und wobei der Befestigungsclip (16) ein Gehäuse (22) aufweist, mit einer Einschuböffnung (26) und einem länglichen Aufnahmeraum (24) für den Bügel (20), und im Aufnahmeraum (24) ein Rastelement (42) vorgesehen ist, das federnd von einer Halteposition, in der das Rastelement (42) den Bügel (20) im Aufnahmeraum (24) hält, in eine Freigabeposition, in der der Bügel (20) in den Aufnahmeraum (24) eingeführt bzw. aus diesem herausgezogen werden kann, und eine Fixierposition bewegbar ist, wobei im Aufnahmeraum (24) und am Rastelement (42) korrespondierende Halteelemente (46, 48) vorgesehen sind, die in der Fixierposition das Rastelement (42) fixieren, **dadurch gekennzeichnet, dass** das Rastelement (42) entgegen der Einschubrichtung (E) von der Halteposition in die Fixierposition bewegbar ist, die Halteelemente (46, 48) in Einschubrichtung (E) hintereinander angeordnet sind und sich in der Halteposition und der Fixierposition in Einschubrichtung (E) zumindest teilweise überdecken.

2. Befestigungsclip nach Anspruch 1, **dadurch gekennzeichnet, dass** an zumindest einem Halteelement (46, 48) ein in Richtung zum anderen Halteelement (46, 48) vorstehender Haken (50, 52) vorgesehen ist, der am jeweils anderen Halteelement (46, 48) angreift, wenn sich das Rastelement (42) in der Fixierposition befindet.

3. Befestigungsclip nach Anspruch 2, **dadurch gekennzeichnet, dass** an beiden Halteelementen (46, 48) Haken (50, 52) vorgesehen sind, die in der Fixierposition des Rastelements (42) miteinander in Eingriff stehen.

4. Befestigungsclip nach einem der vorhergehenden Ansprüche, **dadurch gekennzeichnet, dass** im Gehäuse (22) ein Steg (40) vorgesehen ist, an dem das Rastelement (42) federnd und/oder schwenkbar gelagert ist, wobei der Steg (40) insbesondere an der Einschuböffnung (26) angeordnet ist.

5. Befestigungsclip nach einem der vorhergehenden Ansprüche, **dadurch gekennzeichnet, dass** am Rastelement (42) und/oder am Gehäuse (22) Einführflächen (36, 38), insbesondere Einführschrägen, vorgesehen sind.

6. Befestigungsclip nach einem der vorhergehenden Ansprüche, **dadurch gekennzeichnet, dass** am Rastelement (42) eine Aufnahme (54) für ein Werkzeug (64) vorgesehen ist, mit dem das Rastelement (42) von der Fixierposition in die Halteposition bzw. von Halteposition in die Freigabeposition bewegt werden kann.

7. Befestigungsclip nach einem der vorhergehenden Ansprüche, **dadurch gekennzeichnet, dass** das Gehäuse (26) in Umfangsrichtung und am der Einschuböffnung (26) entgegengesetzten Ende (28) vollständig geschlossen ist.

8. Befestigungsclip nach einem der vorhergehenden Ansprüche, **dadurch gekennzeichnet, dass** der Befestigungsclip (16) an der Einschuböffnung (26) einen umlaufenden, vom Gehäuse (22) abstehenden Flansch (30) aufweist, an dem eine in Umfangsrichtung umlaufende Dichtung (32) vorgesehen ist.

9. Befestigungsclip nach einem der vorhergehenden Ansprüche, **dadurch gekennzeichnet, dass** an der Einschuböffnung (26) eine Anlagefläche für den Bügel vorgesehen ist.

10. Befestigungsclip nach einem der vorhergehenden Ansprüche, **dadurch gekennzeichnet, dass** am Gehäuse (22) Dämpfungselemente (58, 60) aus einem weichen Kunststoff vorgesehen sind.

11. Befestigungsclip nach Anspruch 10, **dadurch gekennzeichnet, dass** die Dämpfungselemente (58, 60) zumindest teilweise in die Wand des Gehäuses (22) integriert sind.

12. Befestigungsclip nach einem der vorhergehenden Ansprüche, **dadurch gekennzeichnet, dass** der Befestigungsclip (16) mit einem Spritzgussverfahren, insbesondere einem Zwei-Komponenten-Spritzgussverfahren, hergestellt ist.

13. Befestigungsclip nach einem der vorhergehenden Ansprüche, **dadurch gekennzeichnet, dass** auf der Außenseite des Gehäuses (22) Befestigungselemente (34), insbesondere Rastvorsprünge vorgesehen sind.

## Claims

1. Fastening clip (16) for fastening a bracket (20), in particular a metal bracket, in a vehicle, wherein the fastening clip (16) can be pushed into an opening (14) in a body part (10) and fixed in said opening, and wherein the fastening clip (16) has a housing (22), with a push-in opening (26) and an elongate receiving space (24) for the bracket (20), and a latching element (42) is provided in the receiving space (24), said latching element being moveable resiliently from a retaining position, in which the latching element (42) retains the bracket (20) in the receiving space (24), into a release position, in which the bracket (20) can be inserted into or pulled out from the receiving space (24), and a fixing position, wherein corresponding retaining elements (46, 48) which fix the latching element (42) in the fixing position are provided in the receiving space (24) and on the latching element (42), **characterized in that** the latching element (42) is moveable from the retaining position into the fixing positon counter to the push-in direction (E), the retaining elements (46, 48) are arranged one behind the other in the push-in direction (E) and at least partially overlap in the push-in direction (E) in the retaining position and the fixing position.

2. Fastening clip according to Claim 1, **characterized in that** a hook (50, 52) is provided on at least one retaining element (46, 48), said hook protruding in the direction of the other retaining element (46, 48) and acting on the respectively other retaining element (46, 48) when the latching element (42) is in the fixing position.

3. Fastening clip according to Claim 2, **characterized in that** hooks (50, 52) which are in engagement with each other in the fixing position of the latching element (42) are provided on the two retaining elements (46, 48).

4. Fastening clip according to one of the preceding claims, **characterized in that** a web (40) on which the latching element (42) is resiliently and/or pivotably mounted is provided in the housing (22), wherein the web (40) is arranged in particular at the push-in opening (26).

5. Fastening clip according to one of the preceding claims, **characterized in that** insertion surfaces (36, 38), in particular insertion slopes, are provided on the latching element (42) and/or on the housing (22).

6. Fastening clip according to one of the preceding claims, **characterized in that** a receptacle (54) for a tool (64) with which the latching element (42) can be moved from the fixing position into the retaining position or from the retaining position into the release position is provided on the latching element (42).

7. Fastening clip according to one of the preceding claims, **characterized in that** the housing (26) is completely closed in the circumferential direction and at the end (28) opposite the push-in opening (26).

8. Fastening clip according to one of the preceding claims, **characterized in that** the fastening clip (16) at the push-in opening (26) has an encircling flange (30) which protrudes from the housing (22) and on which a seal (32) encircling in the circumferential direction is provided.

9. Fastening clip according to one of the preceding claims, **characterized in that** a contact surface for the bracket is provided at the push-in opening (26).

10. Fastening clip according to one of the preceding claims, **characterized in that** damping elements (58, 60) composed of a soft plastic are provided on the housing (22).

11. Fastening clip according to Claim 10, **characterized in that** the damping elements (58, 60) are at least partially integrated in the wall of the housing (22).

12. Fastening clip according to one of the preceding claims, **characterized in that** the fastening clip (16) is produced by an injection-moulding process, in particular a two-component injection-moulding process.

13. Fastening clip according to one of the preceding claims, **characterized in that** fastening elements (34), in particular latching projections, are provided on the outer side of the housing (22).

## Revendications

1. Clip de fixation (16) pour la fixation d'un étrier (20), en particulier d'un étrier métallique, dans un véhicule, le clip de fixation (16) étant enfoncé dans une ouverture (14) d'une pièce de carrosserie (10) et pouvant être fixé dans celle-ci et le clip de fixation (16) présentant un boîtier (22) avec une ouverture d'enfoncement (26) et un espace de réception allongé (24) pour l'étrier (20), et un élément d'encliquetage (42) étant prévu dans l'espace de réception (24), lequel peut être déplacé de manière élastique depuis une position de retenue dans laquelle l'élément d'encliquetage (42) retient l'étrier (20) dans l'espace de réception (24) dans une position de libération dans laquelle l'étrier (20) peut être introduit dans l'espace de réception (24) ou ressorti de celui-ci, et une position fixe, des éléments de retenue correspondants (46, 48) étant prévus dans l'espace de réception (24) et au niveau de l'élément d'encliquetage (42), lesquels fixent l'élément d'encliquetage (42) dans la position de fixation, **caractérisé en ce que** l'élément d'encliquetage (42) peut être déplacé à l'encontre de la direction d'enfoncement (E) de la position de retenue dans la position de fixation, les éléments de retenue (46, 48) sont disposés les uns derrière les autres dans la direction d'enfoncement (E) et se recouvrent au moins partiellement dans la position de retenue et dans la position de fixation dans la direction d'enfoncement (E).

2. Clip de fixation selon la revendication 1, **caractérisé en ce qu'**un crochet (50, 52) faisant saillie dans la direction de l'autre élément de retenue (46, 48) est prévu au niveau d'au moins un élément de retenue (46, 48), lequel crochet vient en prise au niveau de l'autre élément de retenue respectif (46, 48) lorsque l'élément d'encliquetage (42) se trouve dans la position de fixation.

3. Clip de fixation selon la revendication 2, **caractérisé en ce que** des crochets (50, 52) sont prévus au niveau des deux éléments de retenue (46, 48), lesquels crochet sont en prise l'un avec l'autre dans la position de fixation de l'élément d'encliquetage (42).

4. Clip de fixation selon l'une quelconque des revendications précédentes, **caractérisé en ce qu'**une nervure (40) est prévue dans le boîtier (22), au niveau de laquelle l'élément d'encliquetage (42) est supporté de manière élastique et/ou pivotante, la nervure (40) étant notamment disposée au niveau de l'ouverture d'enfoncement (26).

5. Clip de fixation selon l'une quelconque des revendications précédentes, **caractérisé en ce que** des surfaces d'introduction (36, 38), en particulier des biseaux d'introduction, sont prévus sur l'élément d'encliquetage (42) et/ou sur le boîtier (22).

6. Clip de fixation selon l'une quelconque des revendications précédentes, **caractérisé en ce qu'**un logement (54) pour un outil (64) est prévu sur l'élément d'encliquetage (42), avec lequel l'élément d'encliquetage (42) peut être déplacé de la position de fixation dans la position de retenue ou de la position de retenue dans la position de libération.

7. Clip de fixation selon l'une quelconque des revendications précédentes, **caractérisé en ce que** le boîtier (26) est complètement fermé dans la direction périphérique et au niveau de l'extrémité (28) opposée à l'ouverture d'enfoncement (26).

8. Clip de fixation selon l'une quelconque des revendications précédentes, **caractérisé en ce que** le clip de fixation (16) présente au niveau de l'ouverture d'enfoncement (26) une bride périphérique (30) faisant saillie depuis le boîtier (22) sur laquelle est prévu un joint d'étanchéité (32) s'étendant sur le pourtour dans la direction périphérique.

9. Clip de fixation selon l'une quelconque des revendications précédentes, **caractérisé en ce qu'**une surface d'appui pour l'étrier est prévue au niveau de l'ouverture d'enfoncement (26).

10. Clip de fixation selon l'une quelconque des revendications précédentes, **caractérisé en ce que** des éléments d'amortissement (58, 60) en plastique souple sont prévus sur le boîtier (22).

11. Clip de fixation selon la revendication 10, **caractérisé en ce que** les éléments d'amortissement (58, 60) sont au moins en partie intégrés dans la paroi du boîtier (22).

12. Clip de fixation selon l'une quelconque des revendications précédentes, **caractérisé en ce que** le clip de fixation (16) est fabriqué avec un procédé de moulage par injection, en particulier un procédé de moulage par injection à deux composants.

13. Clip de fixation selon l'une quelconque des revendications précédentes, **caractérisé en ce que** des éléments de fixation (34), en particulier des saillies d'encliquetage, sont prévus sur le côté extérieur du boîtier (22).
